# EUROPÄISCHE PATENTANMELDUNG

(11) **EP 3 424 881 A1**
(43) Veröffentlichungstag der Anmeldung: **09.01.2019**
(21) Anmeldenummer: 18181927.7
(22) Anmeldetag: 10.09.2015
(51) Int. Cl.: C01B 33/158, C01B 33/16, G02F 1/1335, G02F 1/13363

(54) **VERFAHREN ZUR HERSTELLUNG VON AEROGELEN**

(30) Priorität: 02.10.2014 DE 102014014377; 03.12.2014 DE 102014117759
(62) Teilanmeldung aus: 15771521.0
(71) Anmelder: Interbran Systems AG, 67360 Lingenfeld (DE)
(72) Erfinder: SCHÜMCHEN, Prof. (Ro) Dr. H. C. Kurt, 53949 Dahlem (DE)
(74) Vertreter: Von Rohr Patentanwälte Partnerschaft mbB

(57) **Zusammenfassung**

Die vorliegende Erfindung betrifft ein Verfahren zur Herstellung von Aerogelen, insbesondere Silica-Aerogelen, mittels eines Sol-Gel-Verfahren.

## Beschreibung

Die vorliegende Erfindung betrifft das technische Gebiet der Aerogele, insbesondere der Silica-Aerogele.

Insbesondere betrifft die vorliegende Erfindung ein Verfahren zur Herstellung von Aerogelen sowie die mit dem erfindungsgemäßen Verfahren erhältlichen Aerogele und deren Verwendungen, insbesondere in Dämmstoffen. Des Weiteren betrifft die vorliegende Erfindung ein Verfahren zur Trocknung von Aerogelen.

Silikatbasierte Aerogele, sogenannte Silica-Aerogele, leiten sich von der OrthoKieselsäure H₄SiO₄ und deren Kondensationsprodukten ab. Sie sind hochporöse Feststoffe mit einem Porenvolumen von im Allgemeinen 95 bis 99,8 Vol.-%, bezogen auf das Gesamtvolumen des Aerogels. Aufgrund der hohen Porosität sind Aerogele schlechte Wärme- und Schallleiter und somit für die Entwicklung von Dämm- und Isolationsmaterialien interessant.

Der Anwendungsbereich von Aerogelen im Bereich der Isolations- und Dämmstoffe beschränkt sich jedoch weitgehend auf einige Spezialanwendungen, da Aerogele aufgrund ihrer hohen Porosität äußerst fragile Festkörperstrukturen darstellen, welche selbst bei relativ geringer mechanischer Belastung zerstört werden. Darüber hinaus ist die Darstellung von Aerogelen recht kostenintensiv und mit einem hohen apparativen Aufwand verbunden, weshalb Aerogele bislang in Isolations- und Dämmmaterialien nicht wirtschaftlich sinnvoll eingesetzt werden können.

Erste Synthesen von Silica-Aerogel sind seit den 1930er-Jahren bekannt. Silica-Aerogel wird üblicherweise nach dem Sol-Gel-Verfahren hergestellt. Die klassische Aerogel-Synthese geht von einer verdünnten Natriumsilikatlösung aus, welche mit Salzsäure angesäuert wird, woraufhin ein amorphes Gel, das sogenannte Hydrogel, ausfällt. Die Trocknung des Gels und somit die Gewinnung eines Aerogels erfolgt in einem Autoklaven unter überkritischen Bedingungen, wodurch sich dieses Verfahren äußerst aufwendig und kostenintensiv gestaltet. Die überkritische Trocknung des Aerogels bzw. Entfernung des Lösemittels ist notwendig, da andernfalls aufgrund der hochporösen Struktur des Aerogels die bei der Entfernung des Lösemittels wirkenden Kapillarkräfte die Festkörperstruktur des Aerogels zerstören. Alternative Methoden zur Herstellung von silikatbasierten Aerogelen gehen von der Hydrolyse von Organsilanen, wie beispielsweise Tetramethoxyorthosilikat bzw. Tetraethoxyorthosilikat, aus, wobei gleichfalls ein Hydrogel bzw. Alkogel gebildet wird und das Lösemittel im überkritischen Bereich entfernt wird. Um das Verfahren einfacher und weniger energieintensiv zu gestalten, wurden Möglichkeiten entwickelt, das Lösemittel bzw. die Lösemittelgemische durch Kohlendioxid zu ersetzen und dies durch eine überkritische Trocknung zu entfernen. Aber auch diese Variante ist apparativ zu aufwendig, um im industriellen Maßstab kostengünstig durchgeführt zu werden.

Darüber hinaus wurden auch Ansätze entwickelt, das Aerogel unter gemäßigteren Bedingungen zu trocknen. Hierzu wird im Allgemeinen das erhaltene Hydrogel bzw. Alkogel hydrophobiert, insbesondere durch Silylierung, beispielsweise mit Dimethylchlorsilan oder Trimethylchlorsilan. Anschließend wird ein Lösemittelaustausch vorgenommen, bei welchem das im Reaktionsgemisch vorhandene polare Lösemittel gegen ein unpolares Lösemittel ausgetauscht wird, um die Oberflächenspannung und somit die Kapillarkräfte noch weiter zu senken. Derartige oberflächenmodifizierte Hydrogele bzw. Alkogele können durch destillative Entfernung des Lösemittels und anschließende Trocknung des Hydrogels bzw. Alkogels bei Temperaturen von über 100 °C zu Aerogelen umgesetzt werden. Durch die Kapillarkräfte schrumpft das Aerogel während des Trocknungsvorgangs, wird jedoch nicht zerstört und nimmt nach Beendigung der Trocknung seine ursprüngliche Gestalt wieder an.

Da aber auch diese Verfahren apparativ sehr aufwendig und zeitintensiv sind und darüber hinaus im Allgemeinen zu Aerogelen führen, welche mechanischen Belastungen nur schwer standhalten, gibt es Bemühungen, die Herstellungsverfahren für Aerogele sowie die physikalischen Parameter der Aerogele weiter zu optimieren.

So beschreibt die DE 195 38 33 A1 ein Verfahren zur unterkritischen Herstellung von Aerogelen, wobei durch Versprühen eines Hydrosols in Paraffin Sol-Kugeln eines prädeterminierten Durchmessers erzeugt werden und die Kugeln nach Gelbildung erneut mit einer Polykieselsäurelösung behandelt werden. Anschließend wird optional eine Hydrophobierung durchgeführt und nachfolgend ein Lösemittelaustausch vorgenommen. Schließlich wird das erhaltene Aerogel unter überkritischen Bedingungen getrocknet.

Die DE 195 41 992 A1 betrifft ein Verfahren zur Herstellung von anorganisch modifizierten Aerogelen unter Verwendung von Alkoholen, wobei eine wässrige Wasserglaslösung zur Herstellung eines Hydrosols mit einer anorganischen Säure versetzt wird und die sich bildenden Salze weitestgehend entfernt werden. Anschließend wird das Gel mit organischem Lösemittel gewaschen, um den Wassergehalt unter 5 Gew.-% zu senken, woraufhin eine Oberflächenmodifizierung und anschließende Trocknung des erhaltenen Gels durchgeführt wird.

Weiterhin betrifft die DE 196 48 798 C2 ein Verfahren zur Herstellung von organisch modifizierten Aerogelen durch Oberflächenmodifikation des wässrigen Gels ohne vorherigen Lösemittelaustausch und anschließende Trocknung.

Die DE 197 52 456 A1 betrifft ein Verfahren zur Herstellung von organisch modifizierten Aerogelen ausgehend von Siliciumtetrachlorid.

Schließlich betrifft die EP 0 171 722 A1 ein Verfahren zur Trocknung von Hydrogelen, insbesondere silikatbasierten Hydrogelen, wobei erst der Wasseranteil des Hydrogels gegen Methanol ausgetauscht wird, welches anschließend wiederum durch Kohlendioxid ersetzt wird. Schließlich erfolgt eine überkritische Entfernung des Kohlendioxids.

All diesen Verfahren ist jedoch gemein, dass auch sie kein partikelförmiges, mechanisch ausreichend stabiles Aerogel unter ökonomisch sinnvollen Rahmenbedingungen bereitstellen können, welches breite Anwendung in Isolations- und Dämmmaterialien erlangen könnte.

Darüber hinaus sind die geschilderten Verfahren des Standes der Technik allesamt komplexe mehrstufige Verfahren, welche üblicherweise nur unter Verwendung zahlreicher organischer Lösemittel und weiterer Additive möglich sind. Da die verwendeten Stoffe oftmals ätzend, giftig bzw. brennbar sind oder unter hohem Druck verwendet werden, müssen besondere Sicherheitsvorkehrungen im Umgang mit diesen Stoffen und zu ihrer Entsorgung getroffen werden. Dies treibt die Kosten für die Aerogel-Herstellung weiter in die Höhe, so dass derzeit Preise von bis zu 120,-- €/kg für Silica-Aerogele gezahlt werden müssen.

Der vorliegenden Erfindung liegt daher die Aufgabe zugrunde, ein Verfahren zur Herstellung eines Aerogels zur Verfügung zu stellen, wobei die zuvor geschilderten, im Zusammenhang mit dem Stand der Technik auftretenden Probleme und Nachteile zumindest weitgehend vermieden oder aber wenigstens abgeschwächt werden sollen.

Insbesondere ist es eine Aufgabe der vorliegenden Erfindung, ein Verfahren zur Herstellung von Aerogelen zur Verfügung zu stellen, welches mit möglichst wenig Verfahrensschritten auskommt, einfach durchzuführen ist und nach Möglichkeit auf die Verwendung problematischer Stoffe, wie beispielsweise brennbarer oder giftiger Lösemittel, verzichtet.

Darüber hinaus ist es eine weitere Aufgabe der vorliegenden Erfindung, ein Aerogel zur Verfügung zu stellen, welches kostengünstig zu produzieren ist, mechanisch belastbar ist und sich zur Verwendung in Dämmstoffen eignet.

Die zuvor gestellte Aufgabenstellung wird erfindungsgemäß durch ein Verfahren nach Anspruch 1 gelöst; weiterer vorteilhafte Weiterbildungen und Ausgestaltungen des erfindungsgemäßen Verfahrens sind Gegenstand der diesbezüglichen Unteransprüche.

Ein weiterer Gegenstand der vorliegenden Erfindung ist das nach dem erfindungsgemäßen Verfahren erhältliche Aerogel nach Anspruch 31.

Wiederum weiterer Gegenstand der vorliegenden Erfindung ist die Verwendung des erfindungsgemäßen Aerogels nach Anspruch 32.

Schließlich ist wiederum weiterer Gegenstand der vorliegenden Erfindung ein Verfahren zur Herstellung eines Silica-Aerogels durch Trocknung eines Hydrogels nach Anspruch 33; weitere vorteilhafte Weiterbildungen und Ausgestaltungen des erfindungsgemäßen Verfahrens sind Gegenstand des diesbezüglichen Unteranspruchs.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Weiterhin versteht es ich von selbst, dass bei der nachfolgenden Angabe von Werten, Zahlen und Bereichen die diesbezüglichen Werte-, Zahlen- und Bereichsangaben nicht beschränkend zu verstehen sind; es versteht sich für den Fachmann vielmehr von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber mit dem Fachmann auf diesem Gebiet an sich geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, dass in der Summe 100 % resultieren; dies versteht sich jedoch von selbst.

Dies vorausgeschickt, wird im Folgenden die vorliegende Erfindung näher beschrieben.

Gegenstand der vorliegenden Erfindung - gemäß einem **ersten** Aspekt der vorliegenden Erfindung - ist somit ein Verfahren zur Herstellung von Aerogelen, insbesondere von Silica-Aerogelen, mittels eines Sol-Gel-Verfahrens, wobei während der Bildung des Gels, eine Hydrophobierung, insbesondere eine *in situ-*Hydrophobierung, des Gels durchgeführt wird.

Aerogele, insbesondere Silica-Aerogele werden üblicherweise durch Sol-Gel-Verfahren gewonnen. Bei Sol-Gel-Verfahren werden Vorläufersubstanzen, sogenannte Prekursoren, durch Solvolyse oder Hydrolyse in die entsprechenden Lösungen oder Dispersionen bzw. kolloidalen Lösungen, das sogenannte Sol, überführt. Aus dem Sol entstehen durch weitere Polymerisationsreaktionen, insbesondere Kondensationsreaktionen, hochpolymere Makromoleküle, das sogenannte Gel. Wenn die Synthese in wässriger Phase stattfindet, werden das Sol und das Gel auch als Hydrosol und Hydrogel bezeichnet. Mit Sol-Gel-Verfahren sind insbesondere polymere Materialien auf Basis nichtmetallischer anorganischer sowie metallischer Materialien zugänglich.

Unter einer Hydrophobierung ist im Rahmen der vorliegenden Erfindung eine Änderung der Grenzflächeneigenschaften insbesondere des Gelmaterials zu verstehen, welche die Wechselwirkung der Oberfläche mit polaren Stoffen schwächt. Insbesondere ist im Rahmen der vorliegenden Erfindung unter einer Hydrophobierung eine Oberflächenmodifizierung des Hydrogels zu verstehen. Im Zuge der Hydrophobierung wird die Oberfläche des Gels, insbesondere des Hydrogels, derart verändert, dass die Wechselwirkungen zwischen der Oberfläche und polaren Stoffen, wie beispielsweise Alkoholen oder Wasser, minimiert werden.

Wie die Anmelderin in überraschender Weise herausgefunden hat, wird insbesondere durch eine *in situ*-Hydrophobierung - d. h. durch eine Hydrophobierung der Grenzfläche des Gels, während das Gel gebildet wird - während der Bildung des Gels, insbesondere des Hydrogels, die Synthese von hydrophobierten Aerogelen in nur einem Löse- bzw. Dispersionsmittel möglich. Die Wechselwirkungen zwischen der Oberfläche und polaren Stoffen, wie beispielsweise Alkoholen oder Wasser, wird dabei derart geschwächt, dass bei der Trocknung eine problemlose Entfernung des Löse- bzw. Dispersionsmittels möglich wird, ohne dass die Aerogelstruktur zerstört wird. Dies ist ungewöhnlich, da insbesondere bei der Herstellung von Silica-Aerogelen, in der Regel ein langwieriger Lösemittelaustausch von Alkohol oder Wasser gegen unpolarere Lösemittel vorgenommen werden muss, um eine vollständige Entfernung dieser unpolaren Löse- oder Dispersionsmittel zu erzielen. Oftmals muss sogar das gewonnene Hydrogel durch Lösemittelaustausch erst in ein Alkogel überführt werden, bevor anschließend weitere Lösemittelwechsel durchgeführt werden können.

Durch eine *in situ*-Hydrophobierung bzw. eine Hydrophobierung während der Bildung des Gels wird im Rahmen der vorliegenden Erfindung eine effiziente Hydrophobierung auch der inneren Grenzflächen, insbesondere der Poren, des Aerogels erreicht, so dass selbst eine weitgehend zerstörungsfreie Entfernung von Wasser aus dem Porensystem des Aerogels möglich ist.

Darüber hinaus wird es im Rahmen der vorliegenden Erfindung bevorzugt, wenn das Gel in Gegenwart mindestens eines Hydrophobierungsmittels gebildet wird. In diesem Zusammenhang werden besonders gute Ergebnisse erhalten, wenn das Hydrophobierungsmittel ausgewählt ist aus Phosphonaten, Sulfonaten, substituierten Aminen, Silanen, Polysiloxan, Silikonaten, Carbonsäurederivaten, Ethoxylaten, Polyethern, insbesondere Silanen, Polysiloxanen und Silikonaten, sowie deren Mischungen. Besonders gute Ergebnisse werden im Rahmen der vorliegenden Erfindung erhalten, wenn Silane und/oder Silikonate als Hydrophobierungsmittel verwendet werden. Insbesondere bei Verwendung von Polysiloxanen, Silikonaten und Silanen als Hydrophobierungsmittel scheint eine besonders gleichmäßige Einarbeitung in das sich bildende Gelmaterial, insbesondere in Silica-Hydrogele, möglich zu sein, wodurch eine wirkungsvolle Oberflächenmodifizierung sämtlicher, d. h. auch innerer Oberflächen, des Gels erreicht werden kann. Dieser Effekt ist insbesondere bei Silanen besonders ausgeprägt.

Wenn im Rahmen der vorliegenden Erfindung ein Polysiloxan als Hydrophobierungsmittel eingesetzt wird, so kann die chemische Zusammensetzung des Polysiloxans in weiten Bereichen variieren. Besonders gute Ergebnisse werden jedoch erhalten, wenn ein Polysiloxan mit reaktiven funktionellen Gruppen, insbesondere ausgewählt aus Hydroxyfunktionen, Aminen und/oder Carbonsäuren, verwendet wird. Gleichfalls werden besonders gute Ergebnisse erreicht, wenn ein Polysiloxan mit einer gewichtsmittleren Molmasse M_{w} im Bereich von 250 bis 50.000 g/mol, insbesondere 300 bis 30.000 g/mol, vorzugsweise 400 bis 20.000 g/mol, bevorzugt 450 bis 10.000 g/mol, besonders bevorzugt 500 bis 5.000 g/mol, eingesetzt wird.

Wenn im Rahmen der vorliegenden Erfindung ein Silan als Hydrophobierungsmittel eingesetzt wird, so kann dessen chemische Natur gleichfalls in weiten Bereichen variieren. Besonders gute Ergebnisse werden jedoch erhalten, wenn ein Silan der allgemeinen Formel I

R¹ₙSiR²₄₋ₙ (I)

mit
n = 1 bis 3, insbesondere 1 oder 2, vorzugsweise 1;
R¹ = C₁- bis C₃₀-Alkyl und/oder C₆- bis C₃₀-Aryl, insbesondere C₂- bis C₂₀-Alkyl und/oder C₆- bis C₂₀-Aryl, vorzugsweise C₃- bis C₂₀-Alkyl und/oder C₆- bis C₂₀-Aryl, bevorzugt C₄- bis C₁₅-Alkyl und/oder C₆- bis C₁₅-Aryl, besonders bevorzugt C₅- bis C₁₂-Alkyl und/oder C₆- bis C₁₂-Aryl, ganz besonders bevorzugt C₅- bis C₁₂-Alkyl;
R² = Halogenid, insbesondere Chlorid, Bromid und/oder lodid,
   OX mit X = Alkyl, Aryl, Polyether und/oder Carbonsäurederivat, insbesondere Alkyl, vorzugsweise C₁- bis C₈-Alkyl, bevorzugt C₂- bis C₄-Alkyl;
verwendet wird.

Für den Fall, dass im Rahmen der vorliegenden Erfindung ein Silikonat als Hydrophobierungsmittel eingesetzt wird, so kann eine Vielzahl von Silikonaten verwendet werden. Besonders gute Ergebnisse werden jedoch erhalten, wenn ein als Silikonat der allgemeinen Formel II

HO-[Si(R)(OM)-O-]ₙH (II)

mit
n = 1 bis 6, insbesondere 1 bis 3, vorzugsweise 1;
R = C₁- bis C₁₀-Alkyl und/oder C₆- bis C₁₅-Aryl, insbesondere C₁- bis C₈-Alkyl und/oder C₆- bis C₁₂-Aryl, vorzugsweise C₁- bis C₆-Alkyl und/oder C₆- bis C₁₀-Aryl, bevorzugt C₁- bis C₄-Alkyl, besonders bevorzugt C₁- bis C₃-Alkyl;
M = einwertiges Metall,
   insbesondere Alkalimetall, vorzugsweise Natrium oder Kalium;
eingesetzt wird. In diesem Zusammenhang hat es sich bewährt, wenn das Hydrophobierungsmittel ausgewählt ist aus Natriummethylsilikonat, Kaliummethylsilikonat, Natriumpropylsilikonat und Kaliumpropylsilikonat.

Gemäß einer bevorzugten Ausführungsform der vorliegenden Erfindung wird zur Durchführung des Verfahrens nur ein Löse- oder Dispersionsmittel verwendet. Unter einem Löse- oder Dispersionsmittel sind dabei im Rahmen der vorliegenden Erfindung flüssige Medien zu verstehen, welche imstande sind, chemische Verbindungen, insbesondere Salze zu lösen bzw. zu dispergieren. Lösemittel bewirken dabei eine Trennung einzelner Bestandteile chemischer Stoffe, d. h. die Stoffe werden auf molekularer Ebene in Einzelmoleküle bzw. in einzelne Bestandteile, wie beispielsweise Ionen getrennt und dann in Lösungen überführt, wobei die einzelnen Bestandteile dauerhaft separiert bleiben und makroskopisch und mikroskopisch als homogenes Einphasensystem wirken. Unter einer Dispersion ist im Rahmen der vorliegenden Erfindung ein Zweiphasengemisch zu verstehen, bei welchem eine erste Phase mit dem zu dispergierenden Stoff, die sogenannte diskontinuierliche Phase, in einer zweiten Phase, dem Dispersionsmittel bzw. der kontinuierlichen Phase, feinverteilt, insbesondere homogen verteilt, vorliegt. Der Übergang von Lösungen zu Dispersionen ist jedoch fließend, so können beispielsweise kolloidale Lösungen weder eindeutig den Lösungen noch den Dispersionen zugerechnet werden. Auch bei "Lösungen" von hochpolymeren Makromolekülen ist nicht eindeutig bestimmbar, ob eine Lösung oder eine Dispersion vorliegt.

Die Verwendung nur eines Lösemittels im Verlauf des erfindungsgemäßen Verfahrens vereinfacht die Verfahrensführung ganz erheblich, da bei der Herstellung von Aerogelen, insbesondere von Silica-Aerogelen, oftmals mehrere Lösemittelwechsel vorgenommen werden müssen. Ein häufigerer Lösungsmittelwechsel führt einerseits zu einem verfahrenstechnisch erhöhten Aufwand, andererseits wird auch die Entsorgung der Lösemittelreste bzw. Dispersionsmittelreste deutlich erschwert, da diese oftmals getrennt gesammelt und entsorgt werden müssen.

Im Allgemeinen wird im Rahmen der vorliegenden Erfindung als Löse- oder Dispersionsmittel ein polares Löse- oder Dispersionsmittel, insbesondere ein polares protisches Löse- oder Dispersionsmittel, verwendet.

Im Rahmen der vorliegenden Erfindung hat es sich bewährt, wenn das Löse- oder Dispersionsmittel ausgewählt ist aus der Gruppe von Alkoholen, insbesondere C₁-bis C₈-Alkoholen, Aminen oder Wasser, insbesondere Methanol, Ethanol, Propanol und Wasser, vorzugsweise Ethanol und Wasser. Besonders bevorzugt wird es im Rahmen der vorliegenden Erfindung, wenn das Löse- oder Dispersionsmittel Wasser ist. Ein Vorteil der Verwendung von Wasser ist, dass es weder giftig noch umweltproblematisch bedenklich ist. Darüber hinaus ist Wasser nicht brennbar und problemlos zu entsorgen.

Gemäß einer bevorzugten Ausführungsform der vorliegenden Erfindung betrifft die vorliegende Erfindung ein Verfahren zur Herstellung von Aerogelen, insbesondere von Silica-Aerogelen, insbesondere wie zuvor beschrieben, wobei
(a) in einem ersten Verfahrensschritt ein Sol, insbesondere ein Hydrosol, hergestellt wird; und
(b) in einem nachfolgenden zweiten Verfahrensschritt das Sol, insbesondere das Hydrosol, in Gegenwart mindestens eines Hydrophobierungsmittels zu einem Gel, insbesondere einem Hydrogel, umgesetzt wird.

Auf diese besondere Ausführungsform des erfindungsgemäßen Verfahrens können die zuvor geschilderten Verfahrensparameter und Merkmale uneingeschränkt gleichermaßen angewendet werden, d. h. die zuvor beschriebenen Merkmale des erfindungsgemäßen Verfahrens können in uneingeschränkter Art und Weise auch für die geschilderte besondere Ausführungsform gelten.

Üblicherweise wird im Rahmen der vorliegenden Erfindung das Sol aus einer Lösung oder Dispersion eines Prekursors hergestellt. In diesem Zusammenhang hat es sich bewährt, wenn die Lösung oder Dispersion den Prekursor, in Mengen von 0,01 bis 20 Gew.-%, insbesondere 0,1 bis 15 Gew.-%, vorzugsweise 0,5 bis 10 Gew.-%, bevorzugt 0,75 bis 8 Gew.-%, bezogen auf die Lösung oder Dispersion, enthält. In den zuvor genannten Konzentrationsbereichen wird eine besonders gleichmäßige Polymerisation bzw. Kondensation der Solmoleküle bzw. -partikel erreicht, so dass ein besonders homogenes Gel, insbesondere Hydrogel, erhalten wird.

Das Sol kann im Rahmen der vorliegenden Erfindung aus einer Vielzahl von möglichen Prekursorverbindungen hergestellt werden. Besonders gute Ergebnisse werden jedoch erhalten, wenn ein Hydrosol auf Basis von Monokieselsäure und/oder kolloidaler Kieselsäure aus Alkalisilikat-Lösung, insbesondere Natriumsilikat-Lösung, als Prekursor hergestellt wird. Im Rahmen der vorliegenden Erfindung werden bevorzugt Silica-Aerogele hergestellt, da diese insbesondere für Dämmzwecke geeignete physikalische Eigenschaften besitzen.

Wenn im Rahmen der vorliegenden Erfindung das Hydrosol aus einer Alkalisilikatlösung hergestellt wird, so hat es sich bewährt, wenn das Hydrosol durch Umsetzung der Alkalisilikatlösung mit Mineralsäuren, insbesondere Salzsäure, Salpetersäure und/oder Schwefelsäure, oder durch lonenaustausch, vorzugsweise durch lonenaustausch, hergestellt wird. Besonders gute Ergebnisse werden in diesem Zusammenhang erhalten, wenn der lonenaustausch mit einem stark sauren Kationenaustauscherharz, insbesondere einem sulfonierten Polystyrolharz, vorzugsweise einem sulfonierten divinylbenzolvernetzten Polystyrolharz, durchgeführt wird. Die Verwendung von Ionenaustauschern, insbesondere auf Basis von sulfonierten divinylbenzolvernetzten Polystyrolharzen, führt zu besonders reinen Hydrosolen, welche nahezu frei sind von Salzen, insbesondere störenden Ionen, welche die Polymerisation des Aerogels behindern bzw. zu Fehlstellen führen.

Im Rahmen der vorliegenden Erfindung hat es sich bewährt, wenn das Sol einen pH-Wert im Bereich von 1 bis 6, insbesondere 2 bis 4, vorzugsweise 2 bis 3, aufweist. Gleichermaßen werden im Rahmen der vorliegenden Erfindung gute Ergebnisse erhalten, wenn das Sol einen pH-Wert von weniger als 6, insbesondere weniger als 4, insbesondere weniger als 3, aufweist. Mit den vorgenannten pH-Werten wird eine besonders homogene Verteilung von nach Möglichkeit niedermolekularen Solmolekülen bzw. -partikeln erzielt.

Darüber hinaus ist im Rahmen der vorliegenden Erfindung vorteilhaft, wenn das Sol eine Leitfähigkeit bei 20 °C von höchstens 1.200 µS/cm, insbesondere höchstens 1.100 µS/cm, vorzugsweise höchstens 1.000 µS/cm, aufweist. Gleichfalls werden besonders gute Ergebnisse erhalten, wenn das Sol eine Leitfähigkeit bei 20°C im Bereich von 10 bis 1.200 µS/cm, insbesondere 20 bis 1.100 µS/cm, vorzugsweise 30 bis 1.000 µS/cm, aufweist. Geringe Leitfähigkeitswerte zeigen an, dass das Sol weitgehend frei ist von Ionen, insbesondere von Fremdionen, welche die anschließende Polymerisation bzw. Kondensation zum Gel negativ beeinflussen.

Üblicherweise wird Verfahrensschritt (a) bei Raumtemperatur oder in einem Temperaturbereich von 20 bis 30 °C durchgeführt.

Gemäß einer bevorzugten Ausführungsform der vorliegenden Erfindung wird in Verfahrensschritt (b), insbesondere zu Beginn von Verfahrensschritt (b), der pH-Wert der Lösung oder Dispersion, insbesondere des in Verfahrensschritt (a) erhaltenen Sols, im Bereich von 3,5 bis 7, insbesondere 3,5 bis 6,5, vorzugsweise 4 bis 6, eingestellt. Im vorgenannten Bereich findet eine besonders gleichmäßige und kontrollierte Polymerisation bzw. Kondensation des Sols zum Gel, insbesondere von Silica-Hydrosolen zu Hydrogelen, statt. Was nun die Einstellung des pH-Wertes in Verfahrensschritt (b) anbelangt, so kann diese auf vielfältige Art und Weise geschehen. Besonders gute Ergebnisse werden im Rahmen der vorliegenden Erfindung jedoch erhalten, wenn der pH-Wert durch Zugabe einer Base, insbesondere durch Zugabe von Natronlauge, Kalilauge und/oder wässriger Ammoniak-Lösung, vorzugsweise wässriger Ammoniak-Lösung, eingestellt wird. Die Verwendung von Ammoniak-Lösung hat insbesondere den Vorteil, dass die entstehenden Ammoniumionen die Polymerisation bzw. Kondensation des Sols zum Gel nicht negativ beeinflussen und darüber hinaus nicht in die Gelstruktur eingebaut werden, wie beispielsweise Natrium- oder Kaliumionen.

Gleichfalls kann es vorgesehen sein, dass der pH-Wert durch Zugabe von Säure, insbesondere einer Mineralsäure, vorzugsweise Salzsäure, eingestellt wird. Eine Einstellung des pH-Werts durch Zugabe von Säuren ist insbesondere kann insbesondere notwendig sein, wenn stark basische Hydrophobierungsmittel, wie beispielsweise Silikonate, verwendet werden.

Im Allgemeinen wird das Hydrophobierungsmittel im Rahmen der vorliegenden Erfindung in Form einer Lösung oder Dispersion, insbesondere einer wässrigen Lösung oder Dispersion, eingesetzt. Was in diesem Zusammenhang die Konzentration des Hydrophobierungsmittels in der Lösung oder Dispersion anbelangt, so kann diese in weiten Bereichen variieren. Besonders gute Ergebnisse werden jedoch erhalten, wenn die Lösung oder Dispersion das Hydrophobierungsmittel in Mengen von 1 bis 90 Gew.-%, insbesondere 10 bis 80 Gew.-%, vorzugsweise 30 bis 70 Gew.-%, bevorzugt 40 bis 60 Gew.-%, bezogen auf die Lösung oder Dispersion des Hydrophobierungsmittels, enthält.

Besonders gute Ergebnisse werden im Rahmen der vorliegenden Erfindung erhalten, wenn das gewichtsbezogene Verhältnis von Solpartikeln zu Hydrophobierungsmittel im Bereich von 10 : 1 bis 1 : 20, insbesondere 5: 1 bis 1 : 10, vorzugsweise 3: 1 bis 1 : 5, bevorzugt 2 : 1 bis 1 : 4, besonders bevorzugt 1 : 1 bis 1 : 3, variiert wird. In den vorgenannten Verhältnissen werden besonders stabile Aerogele erhalten, welche durch Trocknen problemlos von Lösemittelresten bzw. Dispersionsmittelresten, insbesondere Wasser, befreit werden können. Unter Solpartikeln sind dabei die gelösten bzw. dispergierten Teilchen des Sols, insbesondere der Kieselsäure, zu verstehen.

Die Zugabe des Hydrophobierungsmittels in Verfahrensschritt (b) erfolgt üblicherweise nach Einstellung des pH-Wertes. Hierbei wird es bevorzugt, wenn die Zugabe des Hydrophobierungsmittels insbesondere 0,1 bis 60 min, vorzugsweise 0,5 bis 30 min, bevorzugt 0,5 bis 15 min, nach Einstellung des pH-Wertes erfolgt. Die Zugabe des Hydrophobierungsmittels sollte zeitnah nach Einstellung des pH-Wertes und somit nach Beginn der Polymerisations- bzw. Kondensationsreaktion der Solpartikel erfolgen. Bei einer Zugabe im vorgenannten Zeitraum sind zwar schon einige größere Aggregate der dispergierten bzw. gelösten Solpartikel gebildet, jedoch ist die Polymerisation noch nicht derart fortgeschritten, dass ein homogener bzw. gleichmäßiger Einbau des Hydrophobierungsmittel in die Grenzflächen der entstehenden Hydrogelpartikel nicht mehr möglich wäre. Es ist auch möglich, den pH-Wert nach Zugabe des Hydrophobierungsmittels einzustellen, was insbesondere bei Verwendung basischer Hydrophobierungsmittel bevorzugt wird, um den pH-Wert vorzugsweise im schwach sauren Bereich einzustellen.

Gleichermaßen hat es sich im Rahmen der vorliegenden Erfindung als vorteilhaft erwiesen, wenn die Zugabe des Hydrophobierungsmittels zu dem Sol innerhalb eines Zeitraums von weniger als 15 Minuten, insbesondere weniger als 10 Minuten, vorzugsweise weniger als 5 Minuten, beendet ist.

Was die Temperatur anbelangt, bei welcher das Hydrophobierungsmittel mit dem Sol gemischt werden kann, so kann diese naturgemäß in weiten Bereichen variieren. Es hat sich jedoch bewährt, wenn die Zugabe des Hydrophobierungsmittels zu dem Sol bei Temperaturen im Bereich von 10 bis 40 °C, insbesondere 20 bis 30 °C, erfolgt. Im Rahmen der vorliegenden Erfindung kann die Zugabe des Hydrophobierungsmittels zu dem Sol somit bei Raumtemperatur erfolgen.

Gemäß einer bevorzugten Ausführungsform der vorliegenden Erfindung wird in Verfahrensschritt (b) nach Zugabe des Hydrophobierungsmittels die Mischung auf Temperaturen im Bereich von 30 bis 90 °C, insbesondere 35 bis 85 °C, vorzugsweise 40 bis 80 °C, bevorzugt 50 bis 75 °C, besonders bevorzugt 60 bis 70 °C, erwärmt. In den zuvor genannten Temperaturbereichen wird die Kondensationsreaktion der Solpartikel so weit beschleunigt, dass eine rasche Gelbildung erfolgt, jedoch vollzieht sich die Gelbildung langsam genug, um eine möglichst gleichmäßige und homogene poröse Oberflächenstruktur auszubilden.

Was die Dauer angelangt, bei welcher die Mischung bei der erhöhten Temperatur gehalten wird, so kann diese gleichfalls in weiten Bereichen variieren. Es hat sich jedoch im Rahmen der vorliegenden Erfindung bewährt, wenn die Mischung für 0,1 bis 48 Stunden, insbesondere 0,5 bis 35 Stunden, vorzugsweise 1 bis 24 Stunden, bevorzugt 1 bis 12 Stunden, besonders bevorzugt 2 bis 8 Stunden, bei der erhöhten Temperatur gehalten wird. Gleichfalls werden besonders gute Ergebnisse erhalten, wenn die Mischung für weniger als 48 Stunden, insbesondere weniger als 35 Stunden, vorzugsweise weniger als 24 Stunden, bevorzugt weniger als 12 Stunden, besonders bevorzugt weniger als 8 Stunden, bei der erhöhten Temperatur gehalten wird.

Gemäß einer bevorzugten Ausführungsform der vorliegenden Erfindung wird in einem auf Verfahrensschritt (b) folgenden Verfahrensschritt (c) das in Verfahrensschritt (b) erhaltene Gel, insbesondere Hydrogel, zu einem Aerogel verarbeitet. In diesem Zusammenhang kann es im Rahmen der vorliegenden Erfindung insbesondere vorgesehen sein, dass das in Verfahrensschritt (b) erhaltene Gel, insbesondere Hydrogel, isoliert, nachfolgend gegebenenfalls zerkleinert und anschließend getrocknet wird.

Die Isolierung des Gels kann dabei auf beliebige Art und Weise, beispielsweise durch Dekantieren des Löse- bzw. Dispersionsmittels oder durch Filtration, erfolgen. In Abhängigkeit von den gewählten Verfahrensbedingungen ist es jedoch möglich, dass nur geringe Mengen an Lösemittel oder sogar kein freies Lösemittel anfällt. Das in Verfahrensschritt (b) erhaltene Gel, insbesondere Hydrogel, wird dann durch Entfernen aus dem Reaktionsgefäß isoliert, gegebenenfalls zerkleinert und anschließend getrocknet.

Gemäß dieser besonderen Ausführungsform kann es vorgesehen sein, dass in Verfahrensschritt (c) das Gel auf absolute Partikelgrößen im Bereich von 0,01 bis 10 mm, insbesondere 0,1 bis 8 mm, vorzugsweise 0,3 bis 7 mm, bevorzugt 0,5 bis 5 mm, zerkleinert wird. Die Zerkleinerung kann dabei durch beliebige geeignete Methoden erfolgen, beispielsweise durch Schneiden oder Zerhacken mit Messern oder mit Drahtgittern. Die Zerkleinerung des Gels, insbesondere Hydrogels, ist üblicherweise unproblematisch, da es in Form einer hochviskosen pastösen Masse erhalten wird. Es hat sich jedoch bewährt, wenn das Gel, insbesondere Hydrogel, für einen Zeitraum von 1 bis 5 Stunden, insbesondere 1,5 bis 4 Stunden, vorzugsweise 2 bis 3 Stunden, vorgetrocknet wird, insbesondere bei Raumtemperatur an der Luft. Diese Zeitspanne wird oftmals benötigt, um dem Gel, insbesondere Hydrogel, beim Zerkleinern die notwendige Festigkeit und Formstabilität zu verleihen, welche zur Ausbildung diskreter Teilchen bzw. Partikel notwendig ist.

Üblicherweise wird im Rahmen der vorliegenden Erfindung in Verfahrensschritt (c) das Gel einer ein- oder mehrstufigen Trocknung unterworfen.

Was nun die Trocknung des Gels in Verfahrensschritt (c) anbelangt, so kann diese auf vielfältige Art und Weise durchgeführt werden, wobei die Poren- bzw. Festkörperstruktur des Gels, insbesondere Hydrogels, bzw. des resultierenden Aerogels während der Trocknung nicht durch das Wirken starker Kapillarkräfte zerstört werden darf. Im Rahmen der vorliegenden Erfindung werden besonders gute Ergebnisse erhalten, wenn das Gel, insbesondere Hydrogel, mittels überkritischer Trocknung, Gefriertrocknung, thermischer Trocknung oder Kombinationen der vorgenannten Trocknungsverfahren getrocknet wird.

Bei einer überkritischen Trocknung wird das Lösemittel im überkritischen Bereich aus dem Gel, insbesondere Hydrogel, entfernt bzw. das ursprüngliche Lösemittel gegen flüssiges Kohlendioxid ausgetauscht, welches anschließend unter überkritischen Bedingungen entfernt wird. Bei einer Gefriertrocknung wird üblicherweise das in Verfahrensschritt (b) erhaltene Gel, insbesondere Hydrogel, insbesondere nach vorhergehender Zerkleinerung, durch Einwirkung von flüssigem Stickstoff rasch gekühlt und das Lösemittel, insbesondere Wasser, anschließend unter vermindertem Druck durch Sublimation entfernt. Bei der thermischen Trocknung wird das Lösemittel durch Temperaturerhöhung aus der Poren- bzw. Festkörperstruktur des Gels, insbesondere Hydrogels, bzw. des resultierenden Aerogels entfernt, wobei dieser Verfahrensschritt auch unter vermindertem Druck stattfinden kann.

Im Rahmen der vorliegenden Erfindung wird es bevorzugt, wenn das Hydrogel einer einstufigen thermischen Trocknung unterworfen wird. Durch das spezielle erfindungsgemäße Verfahren ist es somit möglich, das Lösemittel, insbesondere Wasser, aus dem Porensystem des Gels, insbesondere des Hydrogels, durch Erwärmen des Gels zu entfernen. Eine einstufige thermische Trocknung ist insbesondere unter Normaldruck, d. h. Umgebungsdruck, technisch besonders einfach durchführbar und mit einem geringen apparativen Aufwand verbunden. Es hat sich dabei im Rahmen der vorliegenden Erfindung bewährt, wenn die Trocknung des Aerogels in einer Klimakammer oder einem Ofen durchgeführt wird, um konstante Trocknungsbedingungen zu garantieren.

Was nun die konkreten Verfahrensbedingungen bei der einstufigen thermischen Trocknung des Hydrogels in Verfahrensschritt (c) anbelangt, so können diese naturgemäß in weiten Bereichen variieren. Besonders gute Ergebnisse werden jedoch erhalten, wenn das Gel bei Temperaturen im Bereich von 20 bis 180 °C, insbesondere 30 bis 150 °C, vorzugsweise 40 bis 120 °C, bevorzugt 50 bis 100 °C, getrocknet wird.

Auch die Dauer der Trocknung kann in weiten Bereichen variieren. Es hat sich allerdings bewährt, wenn das Gel für eine Dauer von 5 bis 72 Stunden, insbesondere 10 bis 60 Stunden, vorzugsweise 24 bis 48 Stunden, getrocknet wird. Die vorgenannten Zeiträume sind für eine vollständige Entfernung des Lösemittels ausreichend, jedoch auch notwendig.

Durch die Hydrophobierung des Gels während der Bildung des Gels, insbesondere durch eine *in situ*-Hyrophobierung, ist es im Rahmen der vorliegenden Erfindung möglich, selbst flüssiges Wasser aus dem Kapillarsystem des Gels, insbesondere des Hydrogels, zu entfernen und so weitgehend zerstörungsfrei zu einem Aerogel zu gelangen. Dies wird möglich, da durch die Hydrophobierung, insbesondere die *in situ*-Hydrophobierung, die Kapillarkräfte im Inneren des Gels, d. h. die Wechselwirkungen zwischen der Oberfläche des Gels und den Molekülen des Löse- bzw. Dispersionsmittels, dermaßen geschwächt sind, dass selbst flüssiges Wasser problemlos entfernt werden kann.

Gemäß einer gleichfalls vorteilhaften Ausführungsform der vorliegenden Erfindung ist es vorgesehen, dass in Verfahrensschritt (c) das Hydrogel einer mehrstufigen, insbesondere zweistufigen, Trocknung unterworfen wird.

Hierbei ist es bevorzugt, wenn in einer ersten Stufe der Trocknung das Hydrogel bei Temperaturen im Bereich von 10 bis 60 °C, insbesondere 20 bis 50 °C, vorzugsweise 30 bis 40 °C, getrocknet wird. Diese Trocknung kann vorteilhafterweise für eine Dauer von 8 bis 72 Stunden, insbesondere 12 bis 60 Stunden, vorzugsweise 20 bis 48 Stunden, durchgeführt werden. Das Hydrogel kann an der Raumluft oder aber vorteilhafterweise in einer Klimakammer, welche besonders konstante Trocknungsbedingungen gewährleistet, getrocknet werden.

Im Rahmen der vorliegenden Erfindung hat es sich darüber hinaus bewährt, wenn in einer zweiten Stufe der Trocknung das Hydrogel bei Temperaturen im Bereich von 60 bis 275 °C, insbesondere 80 bis 250 °C, vorzugsweise 100 bis 230 °C, bevorzugt 150 bis 200 °C, getrocknet wird. In diesem Zusammenhang kann es insbesondere vorgesehen sein, dass die zweite Stufe der Trocknung bei Temperaturen bis zu 275 °C, insbesondere bis zu 250 °C, vorzugsweise bis zu 230 °C, bevorzugt bis zu 200 °C, durchgeführt wird. Hierbei hat es sich bewährt, wenn die zweite Stufe der Trocknung für eine Dauer von 0,2 bis 10 Stunden, insbesondere 0,5 bis 5 Stunden, vorzugsweise 1 bis 2 Stunden, durchgeführt wird.

Die zuvor beschriebene mehrstufige thermische Trocknung eignet sich insbesondere zur Trocknung besonders empfindlicher und mechanisch weniger belastbarer Aerogele. Durch die langsame Entfernung eines Großteils des Löse- bzw. Dispersionsmittels, insbesondere flüssigen Wassers, während des ersten Teilschritts des Trocknungsverfahrensschrittes und einer anschließenden kurzzeitigen Erwärmung auf höhere Temperaturen, ist es möglich, das Löse- bzw. Dispersionsmittel, insbesondere Wasser, sehr schonend aus den Strukturen des Aerogels zu entfernen.

Wie zuvor bereits ausgeführt, ist es im Rahmen der vorliegenden Erfindung jedoch üblicherweise ausreichend, das Hydrogel bzw. das Aerogel durch eine einstufige thermische Trocknung vom Lösemittel, insbesondere Wasser, zu befreien, da im Rahmen der vorliegenden Erfindung durch die Hydrophobierung, insbesondere die *in situ*-Hydrophobierung, die Wechselwirkungen zwischen polaren Lösemitteln, insbesondere Wasser, und der Oberfläche des Gels, insbesondere des Hydrogels, dermaßen herabgesetzt wird, dass trotz der feinen und fragilen Porenstruktur des Gels, insbesondere des Hydrogels, eine Entfernung des Lösemittels ohne Zerstörung der Porenstruktur und somit des Aerogels möglich ist.

Das erfindungsgemäße Verfahren erlaubt eine besonders schonende Trocknung von nach dem Sol-Gel-Verfahren hergestellten Gelen, wodurch Aerogele erhalten werden. Der erfindungsgemäße Trocknungsverfahrensschritt erlaubt es weiterhin, selbst Wasser unter milden Bedingungen aus Silica-Aerogelen zu entfernen, wobei das Aerogel während des Trocknungsprozesses einer nur geringen und darüber hinaus reversiblen Schrumpfung ausgesetzt ist und die Struktur der Aerogelpartikel nicht zerstört wird.

Ein weiterer Gegenstand der vorliegenden Erfindung - gemäß einem **zweiten** Aspekt der vorliegenden - ist ein Aerogel, welches durch das zuvor beschriebene Verfahren erhältlich ist.

Im Allgemeinen weist das Aerogel absolute Partikelgrößen von 0,01 bis 10 mm, insbesondere 0,1 bis 8 mm, vorzugsweise 0,3 bis 7 mm, bevorzugt 0,5 bis 5 mm, auf.

Weiterhin kann es vorgesehen sein, dass das Aerogel eine Schüttdichte von 0,05 bis 0,30 g/cm³, insbesondere 0,08 bis 0,25 g/cm³, vorzugsweise 0,10 bis 0,22 g/cm³, bevorzugt 0,12 bis 0,20 g/cm³, aufweist.

Was die Porosität des erfindungsgemäßen Aeorogels anbelangt, so weist dieses üblicherweise einen mittleren Porendurchmesser von 10 bis 300 nm, insbesondere 40 bis 250 nm, vorzugsweise 60 bis 220 nm, bevorzugt 100 bis 200 nm, auf. Gleichfalls kann es vorgesehen sein, dass das Aerogel einen mittleren Porendurchmesser von weniger als 300 nm, insbesondere weniger als 250 nm, vorzugsweise weniger als 220 nm, bevorzugt weniger als 200 nm, besitzt.

Üblicherweise weist das mit dem erfindungsgemäßen Verfahren erhältliche Aerogel ein Kontaktwinkel mit Wasser im Bereich von 100 bis 170°, insbesondere 130 bis 165°, vorzugsweise 140 bis 165° auf.

Das mit dem erfindungsgemäßen Verfahren erhältliche Aerogel eignet sich insbesondere speziell zur Einarbeitung in Dämmstoffe und Dämmmaterialien, insbesondere zur Wärme- und Schallisolierung bzw. zu Dämmzwecken. Insbesondere eignet sich das erfindungsgemäße Aerogel in besonderer Weise zur Verwendung beispielsweise in Dämmputzen, welche besondere Anforderungen an die mechanische Belastbarkeit der Aerogelpartikel stellen, da insbesondere bei maschinellem Auftrag des Dämmputzes mittels Putzmaschinen der Dämmputz einem Druck von 7 bis 8 bar ausgesetzt sein kann. Für weitergehende Einzelheiten zu diesem Erfindungsaspekt kann auf die vorangehenden Ausführungen zu dem erfindungsgemäßen Verfahren verwiesen werden, welche in Bezug auf das erfindungsgemäße Aerogel entsprechend gelten.

Weiterer Gegenstand der vorliegenden Erfindung - gemäß einem **dritten** Aspekt der vorliegenden Erfindung - ist die Verwendung eines zuvor beschriebenen Aerogels zur Herstellung von Baumaterialien, insbesondere von Dämmmaterialien, wie Dämmputzen, Dämmplatten oder Wärmedämmverbundsystemen.

Für weitergehende Einzelheiten zu diesem Erfindungsaspekt kann auf die vorangehenden Ausführungen zu dem erfindungsgemäßen Verfahren sowie zu dem erfindungsgemäßen Aerogel verwiesen werden, welche in Bezug auf die erfindungsgemäße Verwendung entsprechend gelten.

Schließlich ist wiederum weiterer Gegenstand der vorliegenden Erfindung - gemäß einem **vierten** Aspekt der vorliegenden Erfindung - ein Verfahren zur Herstellung eines Silica-Aerogels, insbesondere eines hydrophobierten Silica-Aerogels, durch Trocknung eines Hydrogels, dadurch gekennzeichnet, dass das Verfahren mehrere, insbesondere mindestens zwei, Verfahrensstufen aufweist, wobei
(a) in einer ersten Verfahrensstufe das Hydrogel bei Temperaturen im Bereich von 10 bis 60 °C, insbesondere 20 bis 50 °C, vorzugsweise 30 bis 40 °C, getrocknet wird, und nachfolgend
(b) in einer zweiten Verfahrensstufe das Hydrogel bei Temperaturen im Bereich von 60 bis 275 °C, insbesondere 80 bis 250 °C, vorzugsweise 100 bis 230 °C, bevorzugt 150 bis 200 °C, getrocknet wird.

Im Rahmen der vorliegenden Erfindung werden besonders gute Ergebnisse erhalten, wenn die erste Verfahrensstufe für eine Dauer von 8 bis 72 Stunden, insbesondere 12 bis 60 Stunden, vorzugsweise 24 bis 48 Stunden, durchgeführt wird. Gleichfalls hat es sich bewährt, wenn die zweite Verfahrensstufe für eine Dauer von 0,2 bis 10 Stunden, insbesondere 0,5 bis 5 Stunden, vorzugsweise 1 bis 2 Stunden, durchgeführt wird.

Das erfindungsgemäße Verfahren zur Herstellung von Silica-Aerogelen aus Hydrogelen, welches aus einer speziellen mehrstufigen, insbesondere zweistufigen, Trocknung des Hydrogels besteht, eignet sich in besonderer Weise zur Herstellung von hydrophobierten Silica-Aerogelen. Das erfindungsgemäße Verfahren erlaubt eine besonders schonende Trocknung der Hydrogele und somit die Herstellung und Isolierung der Aerogele, insbesondere selbst für den Fall, dass Wasser als Lösemittel bzw. Dispersionsmittel verwendet wird. Wasser ist aufgrund seiner Polarität üblicherweise nur schwer aus den Poren von Silica-Aerogelen zu entfernen. Dies gelingt selbst bei hydrophobiertem Silica-Aerogel üblicherweise nur, wenn ein langwieriger und oftmals mehrmaliger Lösemittelaustausch von Wasser gegen unpolarere Lösemittel, wie beispielsweise n-Hexan vorgenommen wird, wobei dieser Austausch zumeist noch über eine Alkogelstufe, bei welcher zuerst Wasser gegen Methanol ausgetauscht wird, vorgenommen wird. Diese aufwendigen Verfahrensschritte bzw. -stufen können durch das erfindungsgemäße Trocknungsverfahren vermieden werden.

Für weitergehende Einzelheiten zu diesem Erfindungsaspekt kann auf die vorangehenden Ausführungen zu den übrigen Erfindungsaspekten verwiesen werden, welche in Bezug auf das erfindungsgemäße Verfahren zur Herstellung von Silica-Aerogelen aus Hydrogelen durch Trocknung gleichfalls gelten.

Der Gegenstand der vorliegenden Erfindung wird nunmehr durch die nachfolgenden Ausführungsbeispiele verdeutlicht, wobei diese den Gegenstand der vorliegenden Erfindung exemplarisch beschreiben, ohne in irgendeiner Weise beschränkend zu wirken.

### Ausführungsbeispiele

### Verfahren zur Herstellung eines Aerogels

Im Folgenden wird die Synthese eines Silica-Aerogels mit Hilfe des erfindungsgemäßen Verfahrens beschrieben.

### 1. Herstellung eines Hydrosols

Eine kommerzielle Natrium-Silikat-Lösung wird mit deionisiertem Wasser auf ca. 5 Gew.-% Natrium-Silikat, bezogen auf das Gesamtgewicht der Lösung, verdünnt und durch ein stark saures Kationen-Austauscherharz auf Basis von sulfoniertem und divinylbenzolvernetztem Polysterol geleitet. Als Reaktionsprodukt wird ein Hydrosol erhalten, welches eine Leitfähigkeit von ca. 900 µS/cm aufweist. Die Natriumionen des Silikats sind folglich nahezu vollständig durch Protonen ersetzt.

### 2. Herstellung eines Hydrogels

Das in Verfahrensschritt 1 erhaltene Hydrosol wird mit wässriger Ammoniaklösung auf einen pH-Wert von 3 eingestellt. Unmittelbar im Anschluss wird das Sol mit einer Dispersion von 50 Gew.-% Octyltriethoxysilan in Wasser versetzt, wobei ein gewichtsbezogenes Verhältnis von gelösten Solpartikeln, d. h. Orthokieselsäure zu Silan von 1 : 3 eingestellt wird. Das Gemisch wird anschließend auf eine Temperatur von 60 °C erwärmt und für 7 Stunden auf dieser Temperatur gehalten, wobei sich ein Hydrogel in Form einer zähflüssigen pastösen Masse bildet.

### 3. Herstellung des Aerogels

Das in Verfahrensschritt 2 erhaltene Hydrogel wird durch Filtration von überschüssigem Wasser getrennt und auf einer Platte ausgegossen. Das Hydrogel trocknet nun ca. 3 Stunden bei Raumtemperatur und wird anschließend mittels eines Gitters auf Partikelgrößen im Bereich von 0,5 bis 5 mm zerkleinert. Die so erhaltenen formstabilen Hydrogelpartikel werden anschließend 41 Stunden bei 85 °C in einer Klimakammer getrocknet.

Es wird ein Aerogel mit folgenden Eigenschaften erhalten:

| | |
|---|---|
| Partikelgröße: | 0,5 bis 5 mm |
| Dichte: | 0,15 bis 0,16 g/cm³ |
| Kontaktwinkel: | > 130° |
| Wärmeleitfähigkeit: | 0,019 bis 0,025 W/(mK) |
| Porendurchmesser: | 100 bis 200 nm |
| Lichtdurchlässigkeit: | keine |

Das erhaltene Aerogel eignet sich in hervorragender Weise als Dämmstoff sowie zur Einarbeitung in Dämmputze. Darüber hinaus werden während der Synthese des Aerogels keine gesundheitsschädlichen, giftigen oder brennbaren Stoffe eingesetzt.

Insbesondere umfasst die vorliegende Erfindung auch folgende Aspekte:
1. Verfahren zur Herstellung von Aerogelen, insbesondere von Silica-Aerogelen, mittels eines Sol-Gel-Verfahrens,
   dadurch gekennzeichnet,
   dass während der Bildung des Gels eine Hydrophobierung, insbesondere eine *in situ*-Hydrophobierung, des Gels durchgeführt wird.
2. Verfahren nach Aspekt 1, dadurch gekennzeichnet, dass das Gel in Gegenwart mindestens eines Hydrophobierungsmittels gebildet wird.
3. Verfahren nach Aspekt 2, dadurch gekennzeichnet, dass das Hydrophobierungsmittel ausgewählt ist aus Phosphonaten, Sulfonaten, substituierten Aminen, Silanen, Polysiloxanen, Silikoanten, Carbonsäurederivaten, Ethoxylaten, Polyethern, insbesondere Silanen, Polysiloxanen und Silikonaten, sowie deren Mischungen.
4. Verfahren nach Aspekt 3, dadurch gekennzeichnet, dass ein Polysiloxan mit reaktiven funktionellen Gruppen, insbesondere ausgewählt aus Hydroxyfunktionen, Aminen und/oder Carbonsäuren, eingesetzt wird und/oder dass ein Polysiloxan mit einer gewichtsmittleren Molmasse M_{w} im Bereich von 250 bis 50.000 g/mol, insbesondere 300 bis 30.000 g/mol, vorzugsweise 400 bis 20.000 g/mol, bevorzugt 450 bis 10.000 g/mol, besonders bevorzugt 500 bis 5.000 g/mol, eingesetzt wird.
5. Verfahren nach Aspekt 3, dadurch gekennzeichnet, dass ein Silan der allgemeinen Formel I

   R'ₙSiR²₄₋ₙ (I)

   mit
   n = 1 bis 3, insbesondere 1 oder 2, vorzugsweise 1;
   R¹ = C₁- bis C₃₀-Alkyl und/oder C₆- bis C₃₀-Aryl, insbesondere C₂- bis C₂₀-Alkyl und/oder C₆- bis C₂₀-Aryl, vorzugsweise C₃- bis C₂₀-Alkyl und/oder C₆- bis C₂₀-Aryl, bevorzugt C₄- bis C₁₅-Alkyl und/oder C₆- bis C₁₅-Aryl, besonders bevorzugt C₅- bis C₁₂-Alkyl und/oder C₆- bis C₁₂-Aryl, ganz besonders bevorzugt C₅- bis C₁₂-Alkyl;
   R² = Halogenid, insbesondere Chlorid, Bromid und/oder lodid,
      OX mit X = Wasserstoff, Alkyl, Aryl, Polyether und/oder Carbonsäurederivat, insbesondere Alkyl, vorzugsweise C₁- bis C₈-Alkyl, bevorzugt C₂- bis C₄-Alkyl;
   verwendet wird.
6. Verfahren nach Aspekt 3, dadurch gekennzeichnet, dass ein als Silikonat der allgemeinen Formel II

   HO-[Si(R)(OM)-O-]ₙH (II)

   mit
   n = 1 bis 6, insbesondere 1 bis 3, vorzugsweise 1;
   R = C₁- bis C₁₀-Alkyl und/oder C₆- bis C₁₅-Aryl, insbesondere C₁- bis C₈-Alkyl und/oder C₆- bis C₁₂-Aryl, vorzugsweise C₁- bis C₆-Alkyl und/oder C₆- bis C₁₀-Aryl, bevorzugt C₁- bis C₄-Alkyl, besonders bevorzugt C₁- bis C₃-Alkyl;
   M = einwertiges Metall, insbesondere Alkalimetall, vorzugsweise Natrium oder Kalium;
   eingesetzt wird
7. Verfahren nach einem der vorangehenden Aspekte, dadurch gekennzeichnet, dass zur Durchführung des Verfahrens nur ein Löse- oder Dispersionsmittel verwendet wird.
8. Verfahren nach Aspekt 7, dadurch gekennzeichnet, dass als Löse- oder Dispersionsmittel ein polares Löse- oder Dispersionsmittel, insbesondere ein polares protisches Löse- oder Dispersionsmittel verwendet wird.
9. Verfahren nach Aspekt 7 oder 8, dadurch gekennzeichnet, dass das Löse- oder Dispersionsmittel ausgewählt ist aus der Gruppe von Alkoholen, insbesondere ein C₁- bis C₈-Alkoholen, Aminen und Wasser, insbesondere Methanol, Ethanol, Propanol und Wasser, vorzugsweise Ethanol und Wasser, insbesondere wobei das Löse- oder Dispersionsmittel bevorzugt Wasser ist.
10. Verfahren zur Herstellung von Aerogelen, insbesondere von Silica-Aerogelen, insbesondere nach einem der vorangehenden Ansprüche, dadurch gekennzeichnet, dass
   (a) in einem ersten Verfahrensschritt ein Sol, insbesondere ein Hydrosol, hergestellt wird; und
   (b) in einem nachfolgenden zweiten Verfahrensschritt das Sol, insbesondere das Hydrosol, in Gegenwart mindestens eines Hydrophobierungsmittels zu einem Gel, insbesondere einem Hydrogel, umgesetzt wird.
11. Verfahren nach Aspekt 10, dadurch gekennzeichnet, dass das Sol aus einer Lösung oder Dispersion mindestens eines Prekursors hergestellt wird, insbesondere wobei die Lösung oder Dispersion den Prekursor in Mengen von 0,01 bis 20 Gew.-%, insbesondere 0,1 bis 15 Gew.-%, vorzugsweise 0,5 bis 10 Gew.-%, bevorzugt 0,75 bis 8 Gew.-%, bezogen auf die Lösung oder Dispersion, enthält.
12. Verfahren nach Aspekt 11, dadurch gekennzeichnet, dass in Verfahrensschritt (a) ein Hydrosol auf Basis von Monokieselsäure und/oder kolloidaler Kieselsäure aus einer Alkalisilikat-Lösung, insbesondere Natriumsilikat-Lösung, als Prekursor hergestellt wird.
13. Verfahren nach Aspekt 12, dadurch gekennzeichnet, dass das Hydrosoldurch Umsetzung der Alkalisilikatlösung mit Mineralsäuren, insbesondere Salzsäure, Salpetersäure und/oder Schwefelsäure, oder durch lonenaustausch, vorzugsweise durch lonenaustausch, hergestellt wird.
14. Verfahren nach Aspekt 13, dadurch gekennzeichnet, dass der lonenaustausch mit einem stark sauren Kationenaustauscherharz, insbesondere einem sulfonierten Polystyrolharz, vorzugsweise einem sulfonierten divinylbenzolvernetzten Polystyrolharz, durchgeführt wird.
15. Verfahren nach einem der vorangehenden Aspekte, dadurch gekennzeichnet, dass das Sol einen pH-Wert im Bereich von 1 bis 6, insbesondere 2 bis 4, vorzugsweise 2 bis 3, aufweist und/oder dass das Sol eine Leitfähigkeit bei 20 °C im Bereich von 10 bis 1.200 µS/cm, insbesondere 20 bis 1.100 µS/cm, vorzugsweise 30 bis 1.000 µS/cm, aufweist.
16. Verfahren nach einem der vorangehenden Aspekte, dadurch gekennzeichnet, dass Verfahrensschritt (a) bei Raumtemperatur, insbesondere in einem Temperaturbereich von 20 bis 30 °C, durchgeführt wird.
17. Verfahren nach einem der vorangehenden Aspekte, dadurch gekennzeichnet, dass in Verfahrensschritt (b), insbesondere zu Beginn von Verfahrensschritt (b), der pH-Wert der Lösung oder Dispersion, insbesondere des in Verfahrensschritt (a) erhaltenen Sols, im Bereich von 3,5 bis 7, insbesondere 3,5 bis 6,5, vorzugsweise 4 bis 6, eingestellt wird, insbesondere wobei der pH-Wert durch Zugabe einer Base, insbesondere Natronlauge, Kalilauge und/oder wässriger Ammoniak-Lösung, vorzugsweise wässriger Ammoniak-Lösung, eingestellt wird und/oder insbesondere wobei der pH-Wert durch Zugabe einer Säure, insbesondere einer Mineralsäure, vorzugsweise Salzsäure, eingestellt wird.
18. Verfahren nach einem der vorangehenden Aspekte, dadurch gekennzeichnet, dass das Hydrophobierungsmittel in Form einer Lösung oder Dispersion, insbesondere einer wässrigen Lösung oder Dispersion, eingesetzt wird, insbesondere wobei die Lösung oder Dispersion das Hydrophobierungsmittel in Mengen von 1 bis 90 Gew.-%, insbesondere 10 bis 80 Gew.-%, vorzugsweise 30 bis 70 Gew.-%, bevorzugt 40 bis 60 Gew.-%, bezogen auf die Lösung oder Dispersion des Hydrophobierungsmittels, enthält.
19. Verfahren nach einem der vorangehenden Aspekte, dadurch gekennzeichnet, dass das gewichtsbezogene Verhältnis von Solpartikeln zu Hydrophobierungsmittel im Bereich von 10 : 1 bis 1 : 20, insbesondere 5: 1 bis 1 : 10, vorzugsweise 3: 1 bis 1 : 5, bevorzugt 2 : 1 bis 1 : 4, besonders bevorzugt 1 : 1 bis 1 : 3, variiert wird.
20. Verfahren nach einem der vorangehenden Aspekte, dadurch gekennzeichnet, dass in Verfahrensschritt (b) die Zugabe des Hydrophobierungsmittels nach Einstellung des pH-Wertes erfolgt, insbesondere 0,1 bis 60 min, vorzugsweise 0,5 bis 30 min, bevorzugt 0,5 bis 15 min, nach Einstellung des pH-Wertes.
21. Verfahren nach einem der vorangehenden Aspekte, dadurch gekennzeichnet, dass in Verfahrensschritt (b) die Mischung nach Zugabe des Hydrophobierungsmittels auf Temperaturen im Bereich von 30 bis 90 °C, insbesondere 35 bis 85 °C, vorzugsweise 40 bis 80 °C, bevorzugt 50 bis 75 °C, besonders bevorzugt 60 bis 70 °C, erwärmt wird.
22. Verfahren nach Aspekt 21, dadurch gekennzeichnet, dass die Mischung für 0,1 bis 48 Stunden, insbesondere 0,5 bis 35 Stunden, vorzugsweise 1 bis 24 Stunden, bevorzugt 1 bis 12 Stunden, besonders bevorzugt 2 bis 8 Stunden, bei der erhöhten Temperatur gehalten wird und/oder dass die Mischung für weniger als 48 Stunden, insbesondere weniger als 35 Stunden, vorzugsweise weniger als 24 Stunden, bevorzugt weniger als 12 Stunden, besonders bevorzugt weniger als 8 Stunden, bei der erhöhten Temperatur gehalten wird.
23. Verfahren nach einem der vorangehenden Aspekte, dadurch gekennzeichnet, dass in einem auf Verfahrensschritt (b) folgenden Verfahrensschritt (c) das in Verfahrensschritt (b) erhaltene Gel, insbesondere Hydrogel, zu einem Aerogel verarbeitet wird, insbesondere wobei das in Verfahrensschritt (b) erhaltene Gel, insbesondere Hydrogel, isoliert, nachfolgend gegebenenfalls zerkleinert und anschließend getrocknet wird.
24. Verfahren nach Aspekt 23, dadurch gekennzeichnet, dass in Verfahrensschritt (c) das Gel, insbesondere Hydrogel, auf absolute Partikelgrößen im Bereich von 0,01 bis 10 mm, insbesondere 0,1 bis 8 mm, vorzugsweise 0,3 bis 7 mm, bevorzugt 0,5 bis 5 mm, zerkleinert wird, insbesondere nachdem das Hydrogel vorgetrocknet wurde.
25. Verfahren nach Aspekt 23 oder 24, dadurch gekennzeichnet, dass in Verfahrensschritt (c) das Gel, insbesondere Hydrogel, einer ein- oder mehrstufigen Trocknung unterworfen wird, insbesondere wobei das Gel, insbesondere Hydrogel, mittels überkritischer Trocknung, Gefriertrocknung, thermischer Trocknung oder Kombinationen der vorgenannten Trocknungsverfahren getrocknet wird.
26. Verfahren nach einem der Aspekte 23 bis 25, dadurch gekennzeichnet, dass das Gel, insbesondere Hydrogel, einer einstufigen thermischen Trocknung unterworfen wird.
27. Verfahren nach Aspekt 26, dadurch gekennzeichnet, dass das Gel, insbesondere Hydrogel, bei Temperaturen im Bereich von 20 bis 180 °C, insbesondere 30 bis 150 °C, vorzugsweise 40 bis 120 °C, bevorzugt 50 bis 100 °C, getrocknet wird, insbesondere wobei das Gel, insbesondere Hydrogel, für eine Dauer von 5 bis 72 Stunden, insbesondere 10 bis 60 Stunden, vorzugsweise 24 bis 48 Stunden, getrocknet wird.
28. Verfahren nach einem der Aspekte 23 bis 25, dadurch gekennzeichnet, dass in Verfahrensschritt (c) das Gel, insbesondere Hydrogel, einer mehrstufigen, insbesondere zweistufigen, Trocknung unterworfen wird.
29. Verfahren nach Aspekt 28, dadurch gekennzeichnet, dass in einer ersten Stufe der Trocknung das Gel, insbesondere Hydrogel, bei Temperaturen im Bereich von 10 bis 60 °C, insbesondere 20 bis 50 °C, vorzugsweise 30 bis 40 °C, getrocknet wird, insbesondere wobei die erste Stufe der Trocknung für eine Dauer von 8 bis 72 Stunden, insbesondere 12 bis 60 Stunden, vorzugsweise 24 bis 48 Stunden, durchgeführt wird.
30. Verfahren nach Aspekt 28 oder 29, dadurch gekennzeichnet, dass in einer zweiten Stufe der Trocknung das Gel, insbesondere Hydrogel, bei Temperaturen im Bereich von 60 bis 275 °C, insbesondere 80 bis 250 °C, vorzugsweise 100 bis 230 °C, bevorzugt 150 bis 200 °C, getrocknet wird, insbesondere wobei die zweite Stufe der Trocknung für eine Dauer von 0,2 bis 10 Stunden, insbesondere 0,5 bis 5 Stunden, vorzugsweise 1 bis 2 Stunden, durchgeführt wird.
31. Aerogel, erhältlich nach einem der vorangehenden Aspekte,
   insbesondere wobei das Aerogel absolute Partikelgrößen von 0,01 bis 10 mm, insbesondere 0,1 bis 8 mm, vorzugsweise 0,3 bis 7 mm, bevorzugt 0,5 bis 5 mm, aufweist und/oder
   insbesondere wobei das Aerogel eine Schüttdichte von 0,05 bis 0,30 g/cm³, insbesondere 0,08 bis 0,25 g/cm³, vorzugsweise 0,10 bis 0,22 g/cm³, bevorzugt 0,12 bis 0,20 g/cm³, aufweist und/oder
   insbesondere wobei das Aerogel einen mittleren Porendurchmesser von 10 bis 300 nm, insbesondere 40 bis 250 nm, vorzugsweise 60 bis 220 nm, bevorzugt 100 bis 200 nm, besitzt und/oder
   insbesondere wobei das Aerogel einen mittleren Porendurchmesser von weniger als 300 nm, insbesondere weniger als 250 nm, vorzugsweise weniger als 220 nm, bevorzugt weniger als 200 nm, besitzt und/oder
   insbesondere wobei das Aerogel einen Kontaktwinkel mit Wasser von 100 bis 170°, insbesondere 130 bis 165°, vorzugsweise 140 bis 165° aufweist.
32. Verwendung eines Aerogels nach Aspekt 31 zur Herstellung von Baumaterialien, insbesondere von Dämmmaterialien, wie Dämmputzen, Dämmplatten oder Wärmedämmverbundsystemen.
33. Verfahren zur Herstellung eines Silica-Aerogels, insbesondere eines hydrophobierten Silica-Aerogels, durch Trocknung eines Hydrogels, dadurch gekennzeichnet, dass das Verfahren mehrere, insbesondere mindestens zwei, Verfahrensstufen aufweist, wobei
   (a) in einer ersten Verfahrensstufe das Hydrogel bei Temperaturen im Bereich von 10 bis 60 °C, insbesondere 20 bis 50 °C, vorzugsweise 30 bis 40 °C, getrocknet wird, und nachfolgend
   (b) in einer zweiten Verfahrensstufe das Hydrogel bei Temperaturen im Bereich von 60 bis 275 °C, insbesondere 80 bis 250 °C, vorzugsweise 100 bis 230 °C, bevorzugt 150 bis 200 °C, getrocknet wird.
34. Verfahren nach Aspekt 33, dadurch gekennzeichnet, dass die erste Verfahrensstufe für eine Dauer von 8 bis 72 Stunden, insbesondere 12 bis 60 Stunden, vorzugsweise 24 bis 48 Stunden, durchgeführt wird und/oder das die zweite Verfahrensstufe für eine Dauer von 0,2 bis 10 Stunden, insbesondere 0,5 bis 5 Stunden, vorzugsweise 1 bis 2 Stunden, durchgeführt wird.

## Patentansprüche

1. Aerogel, insbesondere von Silica-Aerogel, dadurch erhältlich, dass
(a) in einem ersten Verfahrensschritt ein Sol, insbesondere ein Hydrosol, hergestellt wird; und
(b) in einem nachfolgenden zweiten Verfahrensschritt das Sol, insbesondere das Hydrosol, in Gegenwart mindestens eines Hydrophobierungsmittels zu einem Gel, insbesondere einem Hydrogel, umgesetzt wird.

2. Aerogel nach Anspruch 1, **dadurch gekennzeichnet, dass** das Hydrophobierungsmittel ausgewählt ist aus Phosphonaten, Sulfonaten, substituierten Aminen, Silanen, Polysiloxanen, Silikonaten, Carbonsäurederivaten, Ethoxylaten, Polyethern, insbesondere Silanen, Polysiloxanen und Silikonaten, sowie deren Mischungen.

3. Aerogel nach Anspruch 2, **dadurch gekennzeichnet, dass** ein als Silikonat der allgemeinen Formel II
HO-[Si(R)(OM)-O-]ₙH (II)
mit
n = 1 bis 6, insbesondere 1 bis 3, vorzugsweise 1;
R = C₁- bis C₁₀-Alkyl und/oder C₆- bis C₁₅-Aryl, insbesondere C₁- bis C₈-Alkyl und/oder C₆- bis C₁₂-Aryl, vorzugsweise C₁- bis C₆-Alkyl und/oder C₆- bis C₁₀-Aryl, bevorzugt C₁- bis C₄-Alkyl, besonders bevorzugt C₁- bis C₃-Alkyl;
M = einwertiges Metall,
insbesondere Alkalimetall, vorzugsweise Natrium oder Kalium;
eingesetzt wird

4. Aerogel nach einem der vorangehenden Ansprüche, **dadurch gekennzeichnet, dass** zur Durchführung des Verfahrens nur ein Löse- oder Dispersionsmittel verwendet wird.

5. Aerogel nach Anspruch 4, **dadurch gekennzeichnet, dass** das Löse- oder Dispersionsmittel ausgewählt ist aus der Gruppe von Alkoholen, insbesondere ein C₁- bis C₈-Alkoholen, Aminen und Wasser, insbesondere Methanol, Ethanol, Propanol und Wasser, vorzugsweise Ethanol und Wasser, insbesondere wobei das Löse- oder Dispersionsmittel bevorzugt Wasser ist.

6. Aerogel nach einem der vorangehenden Ansprüche, **dadurch gekennzeichnet, dass** das Sol aus einer Lösung oder Dispersion mindestens eines Prekursors hergestellt wird, insbesondere wobei die Lösung oder Dispersion den Prekursor in Mengen von 0,01 bis 20 Gew.-%, insbesondere 0,1 bis 15 Gew.-%, vorzugsweise 0,5 bis 10 Gew.-%, bevorzugt 0,75 bis 8 Gew.-%, bezogen auf die Lösung oder Dispersion, enthält.

7. Aerogel nach einem der vorangehenden Ansprüche, **dadurch gekennzeichnet, dass** in Verfahrensschritt (a) ein Hydrosol auf Basis von Monokieselsäure und/oder kolloidaler Kieselsäure aus einer Alkalisilikat-Lösung, insbesondere Natriumsilikat-Lösung, als Prekursor hergestellt wird.

8. Aerogel nach einem der vorangehenden Ansprüche, **dadurch gekennzeichnet, dass** Verfahrensschritt (a) bei Raumtemperatur, insbesondere in einem Temperaturbereich von 20 bis 30 °C, durchgeführt wird.

9. Aerogel nach einem der vorangehenden Ansprüche, **dadurch gekennzeichnet, dass** in Verfahrensschritt (b), insbesondere zu Beginn von Verfahrensschritt (b), der pH-Wert der Lösung oder Dispersion, insbesondere des in Verfahrensschritt (a) erhaltenen Sols, im Bereich von 3,5 bis 7, insbesondere 3,5 bis 6,5, vorzugsweise 4 bis 6, eingestellt wird, insbesondere wobei der pH-Wert durch Zugabe einer Base, insbesondere Natronlauge, Kalilauge und/oder wässriger Ammoniak-Lösung, vorzugsweise wässriger Ammoniak-Lösung, eingestellt wird und/oder insbesondere wobei der pH-Wert durch Zugabe einer Säure, insbesondere einer Mineralsäure, vorzugsweise Salzsäure, eingestellt wird.

10. Aerogel nach einem der vorangehenden Ansprüche, **dadurch gekennzeichnet, dass** das gewichtsbezogene Verhältnis von Solpartikeln zu Hydrophobierungsmittel im Bereich von 10 : 1 bis 1 : 20, insbesondere 5: 1 bis 1 : 10, vorzugsweise 3: 1 bis 1 : 5, bevorzugt 2 : 1 bis 1 : 4, besonders bevorzugt 1 : 1 bis 1 : 3, variiert wird.

11. Aerogel nach einem der vorangehenden Ansprüche, **dadurch gekennzeichnet, dass** in Verfahrensschritt (b) die Mischung nach Zugabe des Hydrophobierungsmittels auf Temperaturen im Bereich von 30 bis 90 °C, insbesondere 35 bis 85 °C, vorzugsweise 40 bis 80 °C, bevorzugt 50 bis 75 °C, besonders bevorzugt 60 bis 70 °C, erwärmt wird.

12. Aerogel nach einem der vorangehenden Ansprüche, **dadurch gekennzeichnet, dass** in einem auf Verfahrensschritt (b) folgenden Verfahrensschritt (c) das in Verfahrensschritt (b) erhaltene Gel, insbesondere Hydrogel, zu einem Aerogel verarbeitet wird, insbesondere wobei das in Verfahrensschritt (b) erhaltene Gel, insbesondere Hydrogel, isoliert, nachfolgend gegebenenfalls zerkleinert und anschließend getrocknet wird.

13. Aerogel nach Anspruch 12, **dadurch gekennzeichnet, dass** in Verfahrensschritt (c) das Gel, insbesondere Hydrogel, einer ein- oder mehrstufigen Trocknung unterworfen wird, insbesondere wobei das Gel, insbesondere Hydrogel, mittels überkritischer Trocknung, Gefriertrocknung, thermischer Trocknung oder Kombinationen der vorgenannten Trocknungsverfahren getrocknet wird.

14. Aerogel nach einem der vorangehen Ansprüche, **dadurch gekennzeichnet, dass** das Aerogel absolute Partikelgrößen von 0,01 bis 10 mm, insbesondere 0,1 bis 8 mm, vorzugsweise 0,3 bis 7 mm, bevorzugt 0,5 bis 5 mm, aufweist und/oder
dass das Aerogel eine Schüttdichte von 0,05 bis 0,30 g/cm³, insbesondere 0,08 bis 0,25 g/cm³, vorzugsweise 0,10 bis 0,22 g/cm³, bevorzugt 0,12 bis 0,20 g/cm³, aufweist und/oder
dass das Aerogel einen mittleren Porendurchmesser von 10 bis 300 nm, insbesondere 40 bis 250 nm, vorzugsweise 60 bis 220 nm, bevorzugt 100 bis 200 nm, besitzt und/oder
dass das Aerogel einen mittleren Porendurchmesser von weniger als 300 nm, insbesondere weniger als 250 nm, vorzugsweise weniger als 220 nm, bevorzugt weniger als 200 nm, besitzt und/oder
dass das Aerogel einen Kontaktwinkel mit Wasser von 100 bis 170°, insbesondere 130 bis 165°, vorzugsweise 140 bis 165° aufweist.

15. Verwendung eines Aerogels nach einem der Ansprüche 1 bis 14 zur Herstellung von Baumaterialien, insbesondere von Dämmmaterialien, wie Dämmputzen, Dämmplatten oder Wärmedämmverbundsystemen.
